# EUROPÄISCHE PATENTANMELDUNG

(11) **EP 2 586 635 A2**
(43) Veröffentlichungstag der Anmeldung: **01.05.2013**
(21) Anmeldenummer: 12188812.7
(22) Anmeldetag: 17.10.2012
(51) Int. Cl.: B60H 1/34, B60H 1/00

(54) **Lüftungsschacht, Abdeckwand hierfür sowie Verfahren und Verwendung**

(30) Priorität: 26.10.2011 CH 17272011
(71) Anmelder: SCHLEGEL AG, 9403 Goldach (CH)
(72) Erfinder: Saller, Maximilian, 82490 Farchant (DE)
(74) Vertreter: Révy von Belvárd, Peter

(57) **Zusammenfassung**

Ein Lüftungsschacht (7) für Fahrzeuge, insbesondere Waggons, weist einen Schachthohlraum (8) dicht umgebende Schachtwände (9) sowie eine Abdeckwand (1a) auf, die mit Löchern (2) für den Durchtritt von Luft ausgestattet ist. An der Abdeckwand (1 a) ist im Schachthohlraum (8) mindestens ein Verstärkungsstreifen (3b) mit den Löchern (2) der Abdeckwand (1 a) entsprechenden Löchern (4) zur Bildung von Luftdüsen angeklebt. Der mindestens eine Verstärkungsstreifen (3b) ist im wesentlichen über die gesamte, der Abdeckwand (1 a) zugekehrte Fläche mittels einer Klebeschicht (5b) an dieser angeklebt, wobei der mindestens eine Verstärkungsstreifen (3b) aus flachem Kunststoff besteht.

## Beschreibung

Die vorliegende Erfindung bezieht sich auf einen Lüftungsschacht nach dem Oberbegriff des Anspruches 1, auf eine Abdeckwand hierfür mit den Merkmalen des Oberbegriffes des Anspruches 4, auf ein Verfahren zum Herstellen einer solchen Abdeckwand gemäss dem Oberbegriff des Anspruches 6 sowie auf die Verwendung einer solchen Abdeckwand für ein Schienenfahrzeug.

Lüftungsschächte der eingangs genannten Art dienen dazu, einen Kabinenraum eines Fahrzeuges mit Luft zu versorgen. Dazu ist an einer Seite des Schachtes, meist an der Unterseite, eine Abdeckwand mit Löchern angebracht, durch welche die Luft strömen kann. Natürlich soll die Abdeckwand nicht schwer sein und wird daher relativ dünn sein. Ohne weitere Massnahmen würde dies aber an der Luftaustrittseite zu Luftwirbeln führen, welche störende Geräusche und eine ungenügende Luftverteilung im Fahrgastraum verursachen. Daher ist es bekannt, im Bereiche der Löcher Verstärkungsstreifen anzubringen, welche die Löcher in Achsrichtung verlängern und so Luftdüsen bilden, welche dem Luftstrahl eine gewisse Richtung geben. Anderseits wird so ermöglicht, dass die Abdeckwand dünn bleibt und nur im Bereiche der Löcher verstärkt ist.

Eine bekannte Lösung für das Verstärken ist die Verwendung eines flachen Metallstreifens mit mit den Löchern der Abdeckwand fluchtenden Löchern, wobei die Längsrandbereiche an der Abdeckplatte festgeklebt werden. Die Anbringung dieses Kleberandes ist sehr heikel, weil bei einer zu dünnen Klebeschicht es zu Undichtheiten, aber auch zu Geräuschbildung kommt, da dann der Streifen in Schwingungen kommen kann.

Eine andere bekannte Lösung sieht einen Metallstreifen mit gegen das Schachtinnere hochgezogenen Rändern vor, unter denen eine ausreichende Klebstoffmasse untergebracht werden kann, um das Ankleben in jedem Falle zu sichern. Ausserdem hat es sich gezeigt, dass die Verwendung solcher hochgezogenen Ränder die Anordnung geräuschärmer macht. Nachteilig ist dabei der höhere Arbeitsaufwand und - da es sich um einen Flüssigklebstoff handelt - die erforderliche lange Trocknungszeit.

Eingehende Untersuchungen der Anmelderin haben auch gezeigt, dass die Tatsache, dass der jeweilige Metallstreifen in der Mitte, zwischen den beiden Rändern, ja nicht an der Abdeckwand festgelegt ist und daher - wie eine Saite - unter Umständen durch die Luft zu Schwingungen angeregt wird, so dass eine Geräuschbildung nicht ganz ausgeschlossen werden kann.

Demnach liegt der Erfindung die Aufgabe zugrunde, einen Lüftungsschacht bzw. eine Abdeckwand hierfür so auszubilden, dass eine Geräuschbildung weitgehend vermieden wird und dabei das Anbringen der Verstärkungsstreifen mit geringem Arbeitsaufwand und ohne lange Trocknungszeit erreicht werden kann. Erfindungsgemäss gelingt dies durch die kennzeichnenden Merkmale des Anspruches 1 bzw. des Anspruches 4.

Dadurch, dass der mindestens eine Verstärkungsstreifen im wesentlichen über die gesamte, der Abdeckwand zugekehrte Fläche an dieser angeklebt ist, genügt eine relativ dünne Klebstoffschicht, um dennoch einen festen Halt des Verstärkungsstreifens zu sichern. Damit entfallen lange Trocknungszeiten. Ausserdem ist dem Verstärkungsstreifen die Möglichkeit des Schwingens genommen. Dies wird noch dadurch unterstützt, dass der mindestens eine Verstärkungsstreifen aus flachem Kunststoff besteht, weil dieser eher dämpfend wirkt.

Im Rahmen der Erfindung hat sich gezeigt, dass der Kunststoff vorteilhaft ein Polyolefin-Kunststoff ist, weil diese Art von Kunststoffen relativ weich und dämpfend ist. Zusätzliche Vorteile liegen darin, dass sie weitere Anforderungen, wie an das Brandverhalten (nach DIN 75200 und 5510-2, insbesondere auch hinsichtlich Toxizität), die Reinigungsmittelbeständigkeit, Hygienevorgaben, auch hinsichtlich Rauchgasentwicklung und der Temperaturbeständigkeit (z.B. von in Mitteleuropa vorkommenden Minusgraden bis etwa 100°C) erfüllen. Es kann sich dabei um ein volles Kunststoffmaterial handeln, alternativ aber auch um einen geschlossenporigen Schaumstoff mit feinen Poren. Die Tatsache der Verwendung von Kunststoff - und gegebenenfalls eines geschäumten Kunststoffes trägt auch zur Verringerung des Gewichtes der Abdeckwand bei.

Es ist bevorzugt, wenn der Kunststoff eine Dicke von 1 bis 5 mm, insbesondere von 2 bis 4 mm hat. Liegt die Dicke unter diesem Bereich, so wird die axiale Verlängerung der Löcher zu gering sein, um sie zu Luftdüsen auszubilden. Liegt die Dicke oberhalb dieses Bereiches, so wird die sich ergebende jeweilige Luftdüse zu lang, was den Luftwiderstand erhöht, einen höheren Druck um Schachtraum erforderlich macht und zu einem Pfeifton des austretenden Luftstrahles führen mag, ganz abgesehen davon dass die Reisenden in unerwünschter Weise einem evt. zu starken Luftstrahl ausgesetzt sind.

Da die Abdeckwand im allgemeinen abnehmbar an den dichten Schachtwänden befestigt ist und daher als Ersatzteil zu betrachten ist, ist im Anspruch 4 eine solche Abdeckwand für sich unter Schutz gestellt.

Da es sich beim Verstärkungsstreifen um einen Kunststoff handelt, der bei der Fahrt auch den Erschütterungen des Fahrzeuges ausgesetzt ist, ist es bevorzugt, wenn der Klebstoff ein Polychloropren-Klebstoff ist.

Zum Herstellen einer solchen Abdeckwand geht man gemäss den kennzeichnenden Merkmalen des Anspruches 6 vorteilhaft so vor, dass nach dem Herstellen eines Verstärkungsstreifens aus Kunststoff, nach dem Auftragen einer Klebstoffschicht ganzflächig auf einer Seite des Kunststoffes und Abdecken dieser Klebstoffschicht mittels eines Abdeckstreifens, der Kunststoff mit Löchern in denselben gleichmässigen Abständen, wie die der Abdeckwand, von der der Klebstoffschicht abgewandten Seite her gelocht werden.

Es versteht sich, dass die ersten oben genannten Merkmale, nämlich das Herstellen des Streifens, das Auftragen einer Klebstoffschicht und das Abdecken dieser Klebstoffschicht bei einem auswärtigen Zulieferer erfolgen kann, Dabei kann auch so vorgegangen werden, dass ganze Kunststofftafeln hergestellt werden, die man nach dem Auftragen der Klebstoffschicht nachträglich in Streifen zerschneidet. Da der Kunststoff - im Vergleich zu den bisherigen Verstärkungsstreifen aus Metall - relativ weich und elastisch ist, wird man beim Ankleben auf die Abdeckwand Sorge tragen müssen, den Kunststoffstreifen nicht unter Spannung zu halten, sondern am besten ihn mittels Rollen auf der Abdeckwand spannungsfrei festzukleben.

Obwohl der erfindungsgemäss Lüftungsschacht mit der Abdeckwand in verschiedenen Fahrzeugen, wie Flugzeugen oder Autobussen zu Anwendung gelangen kann und auch beispielsweise über die Höhe einer Seitenwand ausgerichtet sein kann, ist es bevorzugt, wenn die Merkmale des Anspruches 7 erfüllt sind.

Weitere Einzelheiten der Erfindung ergeben sich aus der nachfolgenden Beschreibung eines bevorzugten Ausführungsbeispieles. Es zeigen:
Fig. 1 einen Lüftungsschacht gemäss einer bevorzugten Ausführung nach der Erfindung in axonometrischer Darstellung; und die
Fig. 2 und 3 Schnitte durch eine Abdeckwand nach dem am Markte vorhandenen Stande der Technik.

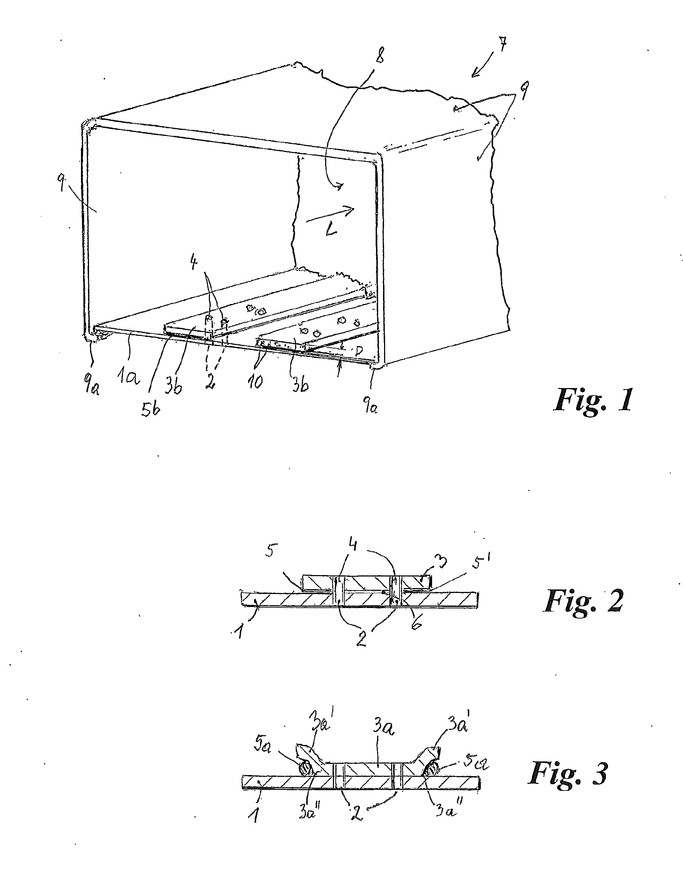

Beginnend mit Fig. 2 ist dort der Schnitt durch eine Abdeckwand 1 für einen Lüftungsschacht zu sehen, die mit Löchern 2 in gleichmässigen Abständen ausgestattet ist. Um diesen Löchern 2 eine grössere Länge nach Art von Luftdüsen zu geben und so einen gerichteteren Luftstrahl zu erzeugen, könnte man die Abdeckwand 1 entsprechend dicker machen. Dies ist aber deshalb unerwünscht, weil dadurch das Gewicht der gesamten Abdeckwand vergrössert wird.

Deshalb wird über der Abdeckwand 1 mindestens ein Verstärkungsstreifen 3 befestigt, der Löcher 4 in denselben Abständen aufweist, wie die der Löcher 2 der Abdeckwand 1. Theoretisch könnte die Befestigung der Verstärkungsstreifen 3 an der Abdeckwand 1 auf verschiedene Weise erfolgen, doch soll die Fläche der Abdeckwand 1 ein glattes, dem Auge gefälliges Aussehen besitzen. Deshalb wird bei einer ersten am Markt bekannten Ausführung der Verstärkungsstreifen 3 der Verstärkungsstreifen an seinen Rändern, von dort ausgehend bis etwa zu den Löchern 3 je eine Schicht 5, 5' eines Metallklebstoffes, wie dem unter dem Handelsnamen Araldit® bekannten Metallklebstoff, aufgetragen.

Die Folgen davon sind, dass einerseits zwischen den Klebstoffschichten 5, 5' ein freier Raum 6 verbleibt, und dass anderseits hohe Genauigkeitsanforderungen an das Auftragen der Klebstoffschicht 5, 5' zu stellen sind. Denn ist diese Klebstoffschicht nur an einer Stelle unterbrochen, so ergeben sich Leckagen zwischen dem oberhalb der Abdeckwand befindlichen Schachtraum und dem Hohlraum 6, was zu Pfeiftönen führen kann. Ist aber die Klebstoffschicht zu dick, dann ergibt sich für den Abschnitt des Verstärkungsstreifens 3, der zwischen den beiden Klebstoffrändern 5, 5' gelegen ist, die Möglichkeit, unter dem Einfluss der Luftströmung zu schwingen, was wieder mit einer Geräuschbildung verbunden ist. Ein weiterer Nachteil liegt darin, dass somit der Verstärkungsstreifen 3 mit der Abdeckwand 1 nur über einen schmalen Flächenbereich der Klebstoffschichten 5, 5' verbunden ist, so dass er sich unter den Erschütterungen der Fahrt eines Fahrzeuges leicht lösen kann und dann wieder die Pfeifgeräusche auftreten.

Bei einer ebenfalls am Markte bekannten Ausführung nach Fig. 3 ist oberhalb der Abdeckwand 1 ("oberhalb", weil sich die Lüftungsschächte in Fahrzeugen meist über die Decke hin erstrecken) ein Verstärkungsstreifen 3a mit hochgezogenen Rändern 3a' vorgesehen. Auf diese Weise werden zwei Vorteile erreicht: Einerseits kann dadurch eine grössere Klebstoffmasse 5a unter den Rändern 3a' untergebracht werden, was die Verbindung wesentlich verbessert. Auch kann ein Hohlraum 6 (Fig. 2) durch festes Anlegen des Verstärkungsstreifens 3a an die Abdeckwand 1, und dadurch auch leichter ein Schwingen des Mittelteiles des Verstärkungsstreifens 3a weitgehend vermieden werden, obwohl die durch die hochgezogenen Ränder 3a' entstehende Biegekante 3a" ein Aufwölben des Mittelteiles des Verstärkungsstreifens begünstigt und damit Schwingungen möglich sind. Nachteilig ist aber vor allem, dass das Anbringen der Klebstoffmasse 5a mit einem gewissen Arbeitsaufwand verbunden ist, und dass anschliessend (da es sich um einen Flüssigklebstoff handelt) eine relativ lange Trocknungszeit erforderlich ist, was die Produktionskosten erhöht.

Die Erfindung wird nun an Hand der Fig. 1 beschrieben, wobei die Aufgabe darin besteht, einen Lüftungsschacht bzw. eine Abdeckwand hierfür so auszubilden, dass eine Geräuschbildung weitgehend vermieden wird und dabei das Anbringen der Verstärkungsstreifen mit geringem Arbeitsaufwand und ohne lange Trocknungszeit erreicht werden kann. Gemäss Fig. 1 ist ein sich der Länge nach im Deckenbereich eines (nicht dargestellten) Schienenfahrzeugs erstreckender Lüftungsschacht 7 mit einen Schachthohlraum 8 dicht umgebenden Schachtwänden 9 vorgesehen. Der Schacht 7 ist, wie es häufig der Fall ist, etwa in Form eines Quaders dargestellt, so dass er zwei wenigstens annähernd vertikale Seitenwände und oben eine horizontale Deckwand aufweist, doch ist die Erfindung nicht auf eine solche Ausführungsform beschränkt; vielmehr könnten die Wände 9 mehr oder weniger gerundet oder abgeschrägt sein.

An der dem jeweiligen Fahrgastraum zugewandten Seite ist der Lüftungsschacht 7 mit der Abdeckwand 1a versehen, welche rasterartige in mehr oder minder gleichmässigen Abständen voneinander Reihen von Löchern 2a aufweist. Beim dargestellten Ausführungsbeispiel sind zwei Doppelreihen solcher Löcher 2 jeweils durch einen Verstärkungsstreifen 3b abgedeckt bzw. verstärkt. Diese Verstärkungsstreifen 3b erstrecken sich gemäss Fig. 1 in Richtung der Längsachse L, doch ist es häufig bevorzugter, wenn sie quer zur Längsachse L verlaufen.

An dieser Stelle sei hervorgehoben, dass die Anordnung der Löcher 2 zwar häufig so angewendet wird, dass es im Rahmen der Erfindung durchaus möglich wäre, über die Länge des Schachtes 7 auch jeweils Löcher in einer Kreisanordnung, z.B. mit konzentrischen Kreisen, vorzusehen. In diesem Falle würden die Verstärkungsstreifen vielleicht eher plattenförmig oder kreisförmig sein, und deshalb soll im Rahmen dieser Beschreibung der Ausdruck "Verstärkungsstreifen" in einem weiteren Sinne als sonst üblich so verstanden werden, dass er auch solche Formen umfasst. Auch hängt die Anzahl der Löcher oder Lochreihen quer zur Längsrichtung L des Schachtes 7 von seiner Breite ab, d.h. es kann sich jeweils um ein einzelnes Loch hintereinander in Längsrichtung L handeln, (was weniger bevorzugt ist) oder eben um Lochpaare (nur zwei davon sind dargestellt) oder um jeweils drei Löcher in Querrichtung pro Verstärkungsstreifen 3b, und je nach Breite des Schachtes 7 können auch mehr als die hier gezeigten zwei Doppellochreihen vorgesehen werden. Während Fig. 1 die Reihen der Löcher in Richtung der Längsachse L verlaufend zeigt, wird es in vielen Fällen aber so sein, dass die Lochreihen (auch mit mehr als drei Löchern) sich quer zur Längsachse L erstrecken.

Die Abdeckwand 1a ist hier an den Wänden 9 über je eine Umbördelung 9a mit den Schachtwänden 9 verbunden, so dass sie über diese Umbördelung in den Schacht 7 eingeschoben werden kann, doch ist die Erfindung auf die Art der Befestigung der Abdeckwand 3b mit den Schachtwänden 9 nicht eingeschränkt, vielmehr kann jede Art von Befestigungen, die Verschlüsse, Schnappverschlüsse usw. angewandt werden.

Erfindungsgemäss der mindestens eine Verstärkungsstreifen 3b besteht aus flachem Kunststoff, der an sich schon eine besser schalldämpfende Wirkung hat als ein Metallstreifen (siehe die Streifen 3, 3a in den Fig. 2 und 3). Dieser Kunststoff ist vorzugsweise ein Polyolefin-Kunststoff, insbesondere Polyäthylen oder Polypropylen, z.B. ein geschlossenporiger Schaumstoff (siehe die angedeuteten Poren 10), weil diese Kunststoffe relativ weich und dadurch auch gut schalldämpfend sind, wobei Erschütterungen des jeweiligen Fahrzeuges bei der Fahrt die Klebung nicht beeinträchtigen. Ausserdem erfüllen sie auch weitere Anforderungen, wie an das Brandverhalten (nach DIN 75200 und 5510-2, insbesondere auch hinsichtlich Toxizität), die Reinigungsmittelbeständigkeit, Hygienevorgaben, auch hinsichtlich Rauchgasentwicklung und der Temperaturbeständigkeit (z.B. von in Mitteleuropa vorkommenden Minusgraden bis etwa 100°C).

Die Dicke D wird bevorzugt in der Grössenordnung von 1 bis 5 mm, insbesondere von 2 bis 4 mm, liegen, denn liegt die Dicke unter diesem Bereich, so wird die axiale Verlängerung der Löcher 2 zu gering sein, um sie zu Luftdüsen auszubilden. Liegt die Dicke D oberhalb dieses Bereiches, so wird die sich ergebende jeweilige Luftdüse zu lang, was den Luftwiderstand erhöht, einen höheren Druck um Schachtraum 8 erforderlich macht und zu einem Pfeifton des austretenden Luftstrahles führen mag, ganz abgesehen davon dass die Reisenden in unerwünschter Weise einem evt. zu starken Luftstrahl ausgesetzt sind.

Beide oben erwähnten Massnahmen, nämlich das Festkleben im wesentlichen über die gesamte der Abdeckwand 1a zugekehrte Fläche und die Verwendung eines (relativ weichen, z.B. mit 70±10 Shore-A-Härte nach DIN 53 505) Kunststoffes, verbessern
- die feste Anhaftung des Verstärkungsstreifens 3b an der Abdeckwand 1a
- die Schalldämpfung, und
- erleichtern das Gewicht der Gesamtkonstruktion der Abdeckplatte 1a.

Für die Klebstoffschicht 5b wird vorteilhaft der Klebstoff ein Polychloropren-Klebstoff ausgewählt, weil dieser den Verstärkungsstreifen 3b nachgiebig an der Abdeckplatte 1a festhält.

Zur besseren Handhabung beim Herstellen der Abdeckplatte 1a wird die Klebstoffschicht 5b zweckmässig zunächst einmal durch einen Abdeckstreifen (nicht dargestellt) abgedeckt sein. An den Abdeckstreifen werden keine besonderen Anforderungen gestellt, ausser, dass es sich von der Klebstoffschicht leicht ablösen lässt, ohne zu reissen. Deshalb ist ein Streifen aus einem Kunststoff, wie Polypropylen, bevorzugt. Der so mit der Klebstoffschicht 5b und dem Abdeckstreifen ausgerüstete Kunststoff 3b, kann z.B. als Platten von einem externen Erzeuger angeliefert werden, worauf er in Streifen geschnitten wird. Alternativ liefert der externe Erzeuger bereits die fertigen Streifen 3b. Anschliessend wird der Rasterabstand der Löcher 2 der Abdeckwand 1a bestimmt und dann der der Kunststoffstreifen 3b mit Löchern 4 in denselben gleichmässigen Abständen, wie die der Abdeckwand 1a, von der der Klebstoffschicht 5b abgewandten Seite (bezogen auf Fig. 1 von oben her) her gelocht, wobei auch der Abdeckstreifen gelocht wird, bevor er abgenommen und der Verstärkungsstreifen - nach Markieren der Löcher 2, 4 durch eingesetzte Stifte - auf die Abdeckwand 1a aufgesetzt wird. Da der Kunststoff 3b auf Dehnungen sehr empfindlich ist, sind die genannten Stifte günstig, und das Festkleben erfolgt vorteilhaft dehnungsfrei mittels einer Pressrolle. Alternativ kann das Stanzen der Löcher 2, 4 von Abdeckwand 1a und Verstärkungsstreifen nach dem Festkleben desselben gleichzeitig vorgenommen werden.

## Patentansprüche

1. Lüftungsschacht (7) für Fahrzeuge, insbesondere Waggons, mit einen Schachthohlraum (8) dicht umgebenden Schachtwänden (9) sowie einer Abdeckwand (1a), die mit Löchern (2) für den Durchtritt von Luft ausgestattet ist, an welcher Abdeckwand (1a) im Schachthohlraum (8) mindestens ein Verstärkungsstreifen (3b) mit den Löchern (2) der Abdeckwand (1a) entsprechenden Löchern (4) zur Bildung von Luftdüsen angeklebt ist, **dadurch gekennzeichnet, dass** der mindestens eine Verstärkungsstreifen (3b) im wesentlichen über die gesamte, der Abdeckwand (1a) zugekehrte Fläche mittels einer Klebstoffschicht (5b) an dieser angeklebt ist, und dass der mindestens eine Verstärkungsstreifen (3b) aus flachem Kunststoff besteht.

2. Lüftungsschacht nach Anspruch 1, **dadurch gekennzeichnet, dass** der Kunststoff ein Polyolefin-Kunststoff ist, vorzugsweise Polyäthylen oder Polypropylen, z.B. ein geschlossenporiger Schaumstoff.

3. Lüftungsschacht nach Anspruch 1 oder 2, **dadurch gekennzeichnet, dass** der Kunststoff eine Dicke (D) von 1 bis 5 mm, insbesondere von 2 bis 4 mm hat.

4. Abdeckwand (1 a) mit Löchern (2) für einen Lüftungsschacht (7) nach einem der vorhergehenden Ansprüche, an welcher an einer Seite Verstärkungsstreifen (3b) mit den Löchern (2) der Abdeckwand (1a) entsprechenden Löchern (4) zur Bildung von Luftdüsen angeklebt sind, **dadurch gekennzeichnet, dass** der mindestens eine Verstärkungsstreifen (3b) mittels einer Klebstoffschicht (5b) im wesentlichen über seine gesamte, der Abdeckwand (1a) zugekehrte Fläche an dieser angeklebt sind, und dass der mindestens eine Verstärkungsstreifen (3b) aus flachem Kunststoff, insbesondere aus einem Polyolefin-Kunststoff, besteht.

5. Abdeckwand nach Anspruch 4, **dadurch gekennzeichnet, dass** der Klebstoff (5b) ein Polychloropren-Klebstoff ist.

6. Verfahren zum Herstellen einer Abdeckwand (1a) nach Anspruch 4 oder 5, bei welcher die Löcher (2) rasterartig in gleichmässigen Abständen voneinander vorgesehen sind, und diese Löcher (2) durch Aufkleben mindestens eines Verstärkungsstreifens (3b) zu Luftdüsen axial verlängert werden, **dadurch gekennzeichnet, dass** nach dem Herstellen eines Verstärkungsstreifens (3b) aus Kunststoff, nach dem Auftragen einer Klebstoffschicht (5b) ganzflächig auf einer Seite des Kunststoffes und Abdecken dieser Klebstoffschicht (5b) mittels eines Abdeckstreifens, der Kunststoff mit Löchern (4) in denselben gleichmässigen Abständen, wie die (2) der Abdeckwand (1a), von der der Klebstoffschicht (5b) abgewandten Seite her gelocht werden.

7. Verwendung eines Lüftungsschachtes (7) nach einem der Ansprüche 1 bis 3 für ein Schienenfahrzeug, in dem sich der Lüftungsschacht (7) quer zur Längsachse (L) im Deckenbereich erstreckt.
